# EUROPEAN PATENT APPLICATION

(11) **EP 4 579 052 A1**
(43) Date of publication of application: **02.07.2025**
(21) Application number: 22956208.7
(22) Date of filing: 21.09.2022
(51) Int. Cl.: E04H 15/48

(54) **VEHICLE-MOUNTED HARDTOP TENT, AND AUTOMOBILE THEREOF**

(30) Priority: 26.08.2022 CN 202211035763
(71) Applicant: Anhui Wollin International Co., Ltd., Wuhu, Anhui 241001 (CN)
(72) Inventor: YE, Jinsong, Wuhu, Anhui 241001 (CN); HU, Kai, Wuhu, Anhui 241001 (CN)
(74) Representative: Ran, Handong
(86) International application number: PCT/CN2022/120339
(87) International publication number: WO 2024/040664

(57) **Abstract**

A vehicle-mounted hardtop tent, which comprises: a top frame and bottom frame, a raising/lowering mechanism, and a plurality of pairs of foldable side panels; the top frame being located above the bottom frame; and the side panels being symmetrically arranged between the top frame and the bottom frame, and being movably connected to the edges of the top frame and bottom frame respectively. When the top frame and the bottom frame are close to one another, the side panels can be folded into a panel surface, the panel surface being basically parallel to the top frame and bottom frame. When the top frame and the bottom frame are away from one another, the side panels are unfolded between the top frame and the bottom frame. The raising/lowering mechanism is disposed neighboring the side panels, is connected at an edge of the top frame and of the bottom frame, and is used for driving the top frame to move closer to or further from the bottom frame. The vehicle-mounted hardtop tent has a simple structure, is convenient to install, is not prone to deformation and damage under pressure, and occupies little space when folded.

## Description

### Field of Technology

The present invention belongs to the technical field of vehicle-mounted tents, particularly relates to a vehicle-mounted hardtop tent and an automobile having the vehicle-mounted hardtop tent.

### Background

With the development of automobile manufacturing industry, the variety of automobile models and automobile accessories has increased. Various types of vehicle-mounted tents with hard tops are emerging. However, tops of existing vehicle-mounted tents are generally made of synthetic flexible materials that are rainproof and windproof. In case of foldable tents, the internal folding skeleton is complicated, making the flexible fabric prone to damage due to friction during repeated folding and unfolding. Additionally, existing vehicle-mounted tents occupy relatively large space when folded. Items stacked or pressed against a folded tent inside a vehicle may hinder normal unfolding and damage the existing folded tent. In extreme weather conditions, such as heavy rain and strong winds, the wind-driven rainfall can easily deform the top of the flexible fabric tent. The deformed top of the tent is prone to damage due to interaction with the internal skeleton and the user experience is also affected. Therefore, it is urgent to develop a foldable tent with a hard top that occupies less space when folded, remains functional even when items are placed on the top of the tent. Further, there is a fairly necessary and urgent demand to avoid damage caused by deformation of the top of the tent in extreme weather conditions.

### Summary

The present invention provides a vehicle-mounted hardtop tent to solve the technical problems of inability to withstand pressure, susceptibility to deformation and damage, and excessive space occupation after folded which are found in existing vehicle-mounted tents.

The objectives of the present invention and solutions to the technical problems are achieved through the following technical means.

A first aspect of the present invention provides a vehicle-mounted hardtop tent, comprising: a top frame and a bottom frame, a lifting mechanism, and multiple pairs of foldable side panels; the top frame is located above the bottom frame; the side panels are arranged in pairs and symmetrically between the top frame and the bottom frame, and are respectively connected to an edge of one of the top frame and the bottom frame; when the top frame and the bottom frame approach each other, the side panels are foldable into a panel surface, which is substantially parallel to the top frame and the bottom frame; when the top frame and the bottom frame move away from each other, the side panels unfold between the top frame and the bottom frame; and the lifting mechanism is arranged adjacent to the side panels and connected to edges of the top frame and the bottom frame, and is configured to drive the top frame to move toward or away from the bottom frame.

Optionally, the vehicle-mounted hardtop tent further comprises folding structures that connect the side panels to the edges of the top frame and the bottom frame in a movable manner, the folding structures comprise first folding structures, wherein the first folding structures are arranged at first movable connections between the side panels and the top frame as well as the bottom frame; each of the first folding structures comprises a first pivot shaft and a first connecting plate; the first pivot shaft is movably connected to both lateral sides of the top frame; one end of the first connecting plate is fixedly connected to a side panel, and the other end of the first connecting plate is fixedly connected to the first pivot shaft.

Optionally, the folding structures further comprise second folding structures, wherein each of the second folding structures comprises a connecting socket and a first folding structure; two first pivot shafts are respectively connected to both ends of the connecting socket in a movable manner; one end of the first connecting plate that is away from the first pivot shaft is connected to a side panel, and other ends are respectively connected to the top frame and the bottom frame in a movable manner.

Optionally, the lifting mechanism comprises a plurality of support arm structures; each of the support arm structures comprises an upper support arm and a lower support arm; one end of the upper support arm is connected to a lower panel surface of the top frame, the other end thereof is connected to one end of the lower support arm, and the other end of the lower support arm is connected to an upper panel surface of the bottom frame; the upper support arm and the lower support arm partially form a second movable connection, and the upper support arm and the lower support arm are folded up and down through the second movable connection; each support arm structure is arranged outside an edge of a side panel, and is configured to drive the top frame to move toward or away from the bottom frame.

Optionally, the support arm structures are arranged in two symmetrically positioned sets, wherein each of the upper support arms is connected to an edge of panel corner of the top frame, and each of the lower support arms is connected to an edge of panel corner of the bottom frame; the two support arm structures form one set, and second movable connections of each set of the support arm structures are opposite to each other.

Optionally, the support arm structure further comprises a hydraulic mechanism, wherein the hydraulic mechanism is arranged on arm surfaces of the upper support arm and the lower support arm which face each other, with one end thereof being fixedly connected to the lower support arm and the other end thereof being fixedly connected to the upper support arm.

Optionally, the lifting mechanism further comprises a plurality of chain-form lifting mechanisms, which are symmetrically arranged on the top frame or the bottom frame; each of the chain-form lifting mechanisms comprises a driving motor, a chain, and an accommodating box; the accommodating box is arranged on the top frame, and the driving motor is arranged inside the accommodating box; one end of the chain is connected to an output shaft of the driving motor, and the other end thereof is fixedly connected to the bottom frame.

Optionally, the chain is located in the middle of two second movable connections, and is arranged in a direction that the top frame approaches or moves away from the bottom frame.

Optionally, the lifting mechanism comprises a plurality of X-shaped scissor-like structures arranged between the top frame and the bottom frame; each of the scissor-like structures comprises a first support arm and a second support arm that are connected in a cross and movable manner; both ends of each of the first support arm and the second support arm are connected to the lower panel surface of the top frame and the upper panel surface of the bottom frame, respectively, allowing lifting and lowering of the top frame over the bottom frame.

Optionally, one end of the first support arm and one end of the second support arm are connected to the lower panel surface of the top frame or the upper panel surface of the bottom frame, respectively, and the other end of the first support arm and the other end of the second support arm are connected to the lower panel surface of the top frame or the upper panel surface of the bottom frame, respectively.

Optionally, an electric push-rod is provided on a portion of the top frame or the bottom frame that is between the first support arm and the second support arm, with one end of the electric push-rod being fixedly connected to the first support arm and the other end thereof being fixedly connected to the second support arm; when the electric push-rod retracts, one of the first support arm and the second support arm slides along a sliding rail towards the other, allowing tops of the first support arm and the second support arm to approach each other, or allowing bottoms of the first support arm and the second support arm to approach each other; when the electric push-rod extends out, one of the first support arm and the second support arm slides along the sliding rail away from the other, allowing the tops of the first support arm and the second support arm to move away from each other, or allowing the bottoms of the first support arm and the second support arm to move away from each other.

Optionally, the electric push-rod is fixedly connected to a synchronous sliding rod, which is fixedly connected to the first or second support arm on the slide rail. The synchronous sliding rod drives the first or second support arm to slide along the slide rail.

Optionally, the scissor-like structures between the top frame and the bottom frame are arranged in a symmetrical or neighboring manner according to an orientation and position of the side panels.

Optionally, the bottom frame and the top frame are plate-like frames, a top frame cap is provided onto the top frame and a bottom frame chassis is provided beneath the bottom frame.

A second aspect of the present invention provides an automobile comprising: a main body, and the hardtop tent as defined in claims 1 to 15, wherein the hardtop tent is installed on a compartment at the top or rear of the body, covers the compartment at the top or rear of the body, and can be folded or unfolded on the compartment at the top or rear of the body.

Compared with the existing technology, the present invention has considerable advantages and beneficial effects. By virtue of the above technical solutions, the present invention has at least the following advantages and beneficial effects:
1. The present invention provides a vehicle-mounted hardtop tent comprising a top frame and a bottom frame, a lifting mechanism, and multiple pairs of foldable side panels. The top frame is located above the bottom frame, and the side panels are arranged in pairs and symmetrically between the top frame and the bottom frame, and are connected to the edges of the top frame and the bottom frame, respectively. When the top frame and the bottom frame approach each other, the side panels can be folded into a panel surface, which is substantially parallel to the top and bottom frames; when the top frame and the bottom frame move away from each other, the side panels unfold between the top frame and the bottom frame; the lifting mechanism is arranged adjacent to the side panels, and is connected to the edges of the top frame and the bottom frame, allowing to drive the top frame to move toward or away from the bottom frame. The present invention features a hard top frame and a hard bottom frame, and both the bottom frame and the top frame are provided with reinforcement ribs arranged in parallel and spaced apart for strengthening the bottom frame and the top frame. This design allows the top of the vehicle-mounted tent to withstand pressure while resisting deformation or damage.
2. The vehicle-mounted hardtop tent according to the present invention further comprises folding structures which connect the side panels with the edges of the top frame and the bottom frame in a movable manner, and first folding structures are provided at first movable connections between the side panels and the top frame as well as the bottom frame. The first folding structure comprises a first pivot shaft and a first connecting plate. The first pivot shaft is inserted with both ends into small holes arranged on inner walls of the top frame, and is connected movably to two oppositely arranged ends of the top frame or an lateral edge of the top frame; one end of the first connecting plate is fixedly connected to an edge of a side panel, and the other end of the first connecting plate is fixedly connected to a lateral side of the first pivot shaft. The present invention also provides second folding structures, each comprising a connecting socket and two first folding structures; two first pivot shafts are respectively connected to both ends at one lateral side of the connecting socket in a movable manner, and one end of the first connecting plate that is away from the first pivot shaft is connected to a side panel, and other ends are respectively connected to the top frame and the bottom frame in a movable manner. The first folding structures and the second folding structures enable the top frame, the bottom frame, and the side panels to be folded and stacked together in a convenient and quick way with simple and easy operation, and the above folding design avoids the problem of excessive space occupation after folding.
3. The chain-form lifting mechanism provided by the present invention cooperates with the support arm structures to enable free lifting and lowering of the top frame relative to the bottom frame, and also allows lifting and lowering of the side panels relative to the top and bottom frames in a time-saving, effort-saving, and convenient and quick manner for practical operation.
4. The present invention provides a plurality of X-shaped scissor-like structures arranged between the top frame and the bottom frame; both ends of each of the first support arm and the second support arm are connected to the lower panel surface of the top frame and the upper panel surface of the bottom frame, respectively, to drive the top frame to approach or move away from the bottom frame. Further, the plurality of scissor-blade structures are arranged in a symmetrical or neighboring manner according to an orientation and position of the side panels. The above-mentioned plurality of X-shaped scissor-like structures improve the stability and durability of the vehicle-mounted hardtop tent, while ensuring smoother movement of the top frame as it approaches or moves away from the bottom frame.

The above description is only an overview of the technical solutions of the present invention. In order to better understand the technical means of the present invention so as to implement according to the content of the description, and in order to make the above and other objectives, features and advantages of the present invention more obvious and understandable, preferred embodiments are set forth below, which is described in detail below in conjunction with the accompanying drawings.

### Brief Description of the Drawings

Fig. 1 is a schematic diagram of a structure of a vehicle-mounted hardtop tent in an unfolded state according to an embodiment of the present invention;
Fig. 2 is a schematic diagram of the structure of the vehicle-mounted hardtop tent in a folded state according to an embodiment of the present invention;
Fig. 3a is a schematic front view of a vehicle-mounted hardtop tent in an unfolded state according to an embodiment of the present invention;
Fig. 3b is a schematic side view of the vehicle-mounted hardtop tent in the unfolded state according to an embodiment of the present invention;
Fig. 4a is a schematic diagram of a structure of a first folding structure according to an embodiment of the present invention;
Fig. 4b is a schematic diagram of the structure of the first folding structure according to an embodiment of the present invention;
Fig. 5 is a schematic diagram of the structure of the first folding structure according to an embodiment of the present invention;
Fig. 6a is a schematic front view of a second folding structure according to an embodiment of the present invention;
Fig. 6b is a schematic diagram of a partial enlargement of the structure of Fig. 6a according to an embodiment of the present invention;
Fig. 6c is a schematic diagram of a partial enlargement of the structure of Fig. 6a according to an embodiment of the present invention;
Fig. 7 is a schematic diagram of a partial enlargement of the structural of Fig. 6a according to an embodiment of the present invention;
Fig. 8a is a schematic diagram of a support arm structure in an unfolded state according to an embodiment of the present invention;
Fig. 8b is a schematic diagram of the support arm structure in a folded state according to an embodiment of the present invention;
Fig. 9a is a schematic front view of a support arm structure in an unfolded state according to the embodiment of the present invention;
Fig. 9b is a schematic side view of the support arm structure in a folded state according to an embodiment of the present invention;
Fig. 10a is a schematic top view of an installation position of a chain according to an embodiment of the present invention;
Fig. 10b is a schematic side view of the installation position of the chain according to an embodiment of the present invention;
Fig. 11a is a schematic diagram of a structure of a vehicle-mounted hardtop tent in an unfolded state according to another embodiment of the present invention;
Fig. 11b is a schematic diagram of the structure of the vehicle-mounted hardtop tent in a folded state according to another embodiment of the present invention;
Fig. 12a is a schematic perspective view of the vehicle-mounted hardtop tent in an unfolded state according to an embodiment of the present invention;
Fig. 12b is a schematic front view of the structure of the vehicle-mounted hardtop tent in an unfolded state according to an embodiment of the present invention;
Fig. 12c is a schematic bottom view of the structure of the vehicle-mounted hardtop tent in an unfolded state according to an embodiment of the present invention;
Fig. 12d is a schematic right view of the structure of the vehicle-mounted hardtop tent in an unfolded state according to an embodiment of the present invention;
Fig. 13a is a schematic perspective view of the vehicle-mounted hardtop tent in a folded state according to an embodiment of the present invention;
Fig. 13b is a schematic front view of the structure of the vehicle-mounted hardtop tent in a folded state according to an embodiment of the present invention;
Fig. 13c is a schematic bottom view of the structure of the vehicle-mounted hardtop tent in a folded state according to an embodiment of the present invention;
Fig. 13d is a schematic right view of the structure of the vehicle-mounted hardtop tent in a folded state according to an embodiment of the present invention;
Fig. 14 is a schematic diagram of a structure of a third movable connection of a scissor-blade structure of a vehicle-mounted hardtop tent according to an embodiment of the present invention;
Fig. 15 is a schematic diagram of a structure of a fourth movable connection of the scissor-blade structure of the vehicle-mounted hardtop tent according to an embodiment of the present invention;
Fig. 16 is a schematic diagram of a structure of a fifth movable connection of the scissor-blade structure of the vehicle-mounted hardtop tent according to an embodiment of the present invention;
Fig. 17 is a schematic diagram of a structure of a fixing site of the push-rod motor according to an embodiment of the present invention;
Fig. 18 is a schematic diagram of a structure of a fifth movable connection according to an embodiment of the present invention;
Fig. 19 is a schematic diagram of perspective view of a skeleton of a vehicle-mounted hardtop tent in an unfolded state according to an embodiment of the present invention;
Fig. 20 is a schematic diagram of a structure of a second top frame cap of a vehicle-mounted hardtop tent according to an embodiment of the present invention;
Fig. 21 is a schematic diagram of a structure of main body of a vehicle-mounted hardtop tent according to another embodiment of the present invention;
Fig. 22 is a schematic diagram of a structure of a second bottom frame chassis of a vehicle-mounted hardtop tent according to an embodiment of the present invention;
Fig. 23 is a schematic diagram of a structure of an onboard tent-fixing crossbar of a vehicle-mounted hardtop tent according to an embodiment of the present invention.

### Description of Reference Numbers

1: Top frame; 10: First top frame cap
101: Second top frame cap; 11: Upper panel corner
2: Bottom frame; 20: First bottom frame chassis
201: Second top frame chassis; 21: Lower panel corner
3: Lifting mechanism; 31: Support arm structure
311: Upper support arm; 312: Lower support arm
313: Hydraulic mechanism; 3131: Hydraulic support bracket
32: Chain-form lifting mechanism; 322: Chain
323: Accommodating box
4: Side panel; 41: Parallel panel surface
5: Folding structure; 51: First folding structure
510: First movable connection; 511: First pivot shaft
512: First connecting plate; 513: Connecting socket plug
52: Second folding structure; 520: Second movable connection
521: First connecting socket; 5212: Second connecting socket
6: Scissor-blade structure; 61: First support arm
62: Second support arm; 63: Third movable connection
631: Perforated pin shaft; 632: Cotter pin
633: First shaft sleeve
71: Fourth movable connection; 711: First base
712: Second shaft sleeve; 72: Fifth movable connection
721: Second base; 722: Slider
73: Slide rail; 74: Edge plate;
75: Fasten bolt
8: Electric push-rod; 801: First fixed rod
81: Push-rod motor; 82: Second fixed rod
821: Fixing base of push-rod motor; 83: Reinforced connecting plate
831: Connection base; 832: Synchronous sliding rod connection
84: Synchronous sliding rod 85: Limit rod
9: Onboard tent-fixing crossbar

### Detailed Description

In order to further elaborate on the technical means and effects of the present invention that aims to the intended objectives of the present invention, the specific implementations, structures, features and effects provided according to the present invention are described in detail below in conjunction with the drawings and the preferred embodiments.

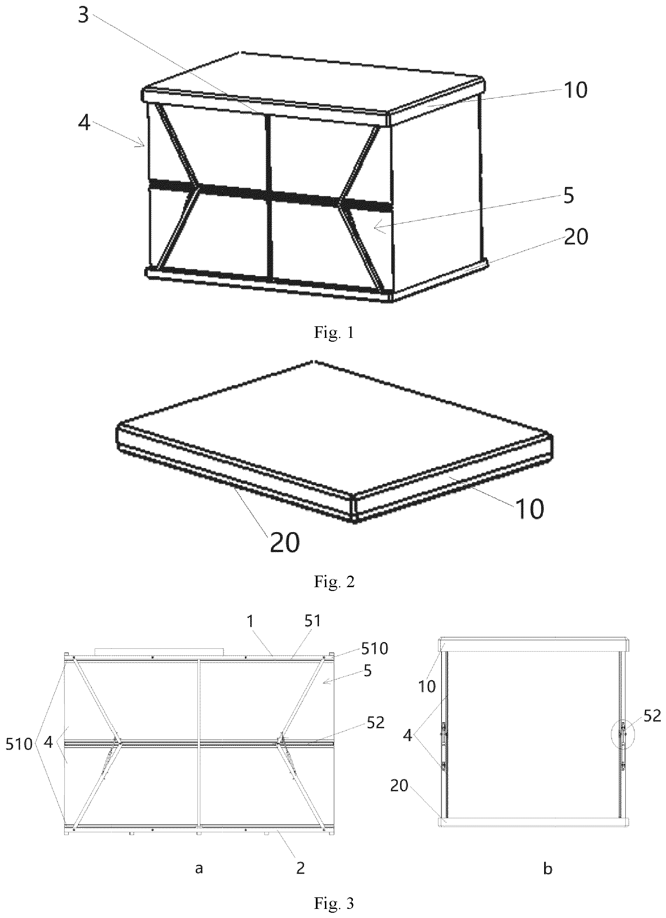

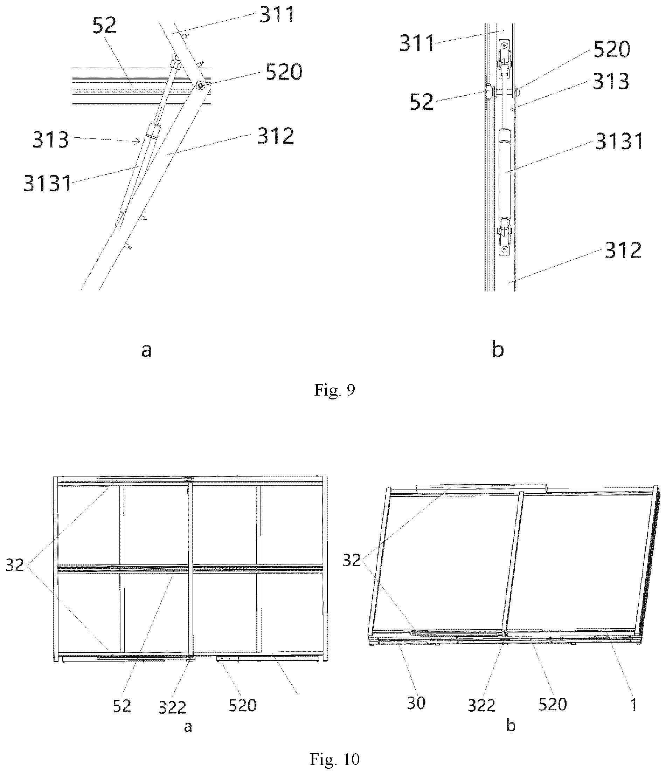

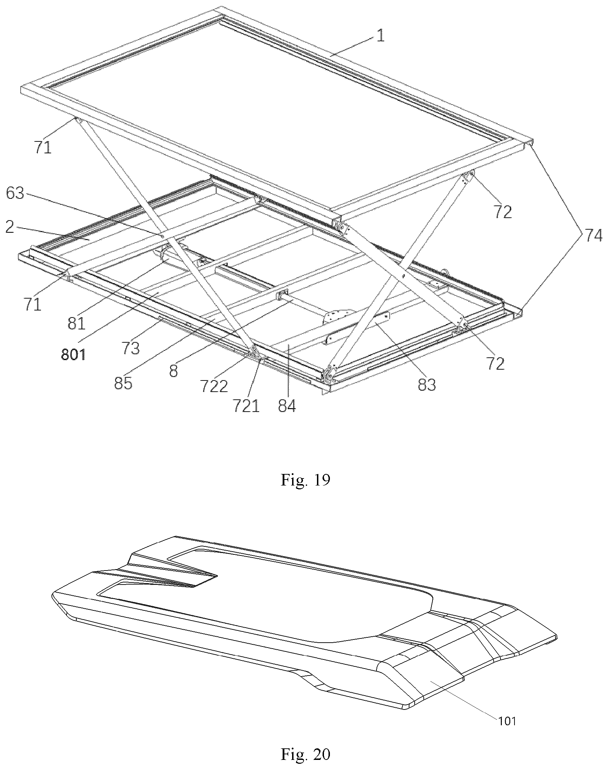

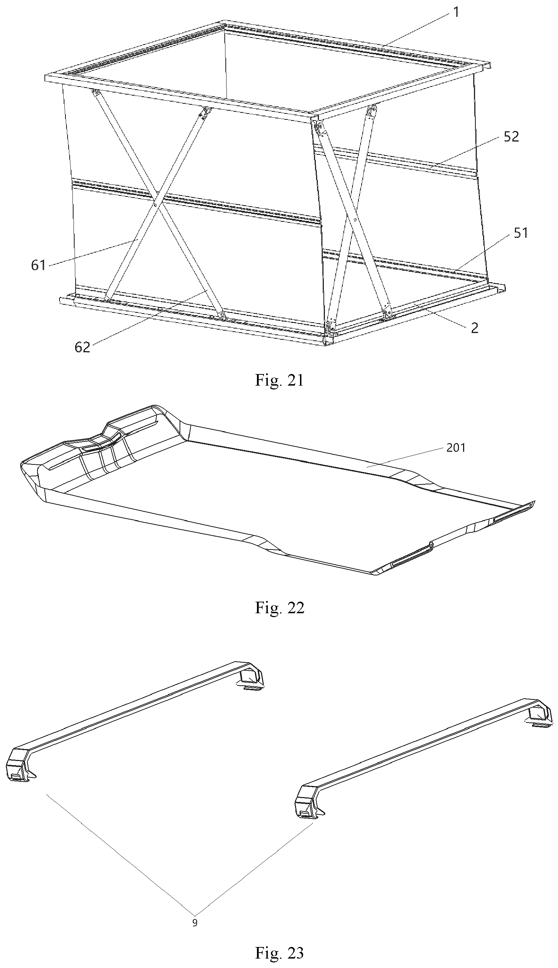

As shown in Figs. 1 and 2, an embodiment of the present invention provides a vehicle-mounted hardtop tent, which includes a top frame 1 and a bottom frame 2, a lifting mechanism 3, and multiple pairs of foldable side panels 4. The top frame 1 is located above the bottom frame 2, and is connected to tops of the side panels 4 and a folding structure 5, respectively. The bottom frame 2 and the top frame 1 are both plate-shaped frames. A top frame cap that matches the top frame 1 is provided above the top frame 1, and a bottom frame chassis that matches the bottom frame 2 is provided below the bottom frame 2. The bottom frame 2 and the top frame 1 each are a quadrilateral frame, and reinforcing ribs for reinforcement of the bottom frame 2 and the top frame 1 are arranged in parallel at intervals on both the bottom frame 2 and the top frame 1. A first bottom frame bottom chassis 20 that brackets onto the bottom frame 2 is provided at the bottom of the bottom frame 2 in a direction close to or away from the bottom frame 2, and a first top frame cap 10 that brackets onto the top frame 1 is provided at the top of the top frame 1 in a direction close to or away from the bottom frame 2. The sum of the heights of the first bottom frame bottom chassis 20 and the first top frame cap 10 is not less than the sum of the heights after folding of the multiple pairs of foldable side panels 4 and a folding structure 31. Jointing at the first bottom frame chassis 20 with edges of cap walls of the first top frame cap 10 can be matched and connected to each other. As shown in Figs. 9a and 9b, as an optional implementation, the top frame cap together with the bottom frame bottom chassis cover the top frame 1 and bottom frame 2 after folding. The top frame cap may also be a second top frame cap 101, and the bottom frame bottom chassis may also be a second bottom frame bottom chassis 201. As shown in Figs. 20 and 22, an upper panel surface of the second top frame cap 101 may further be designed as an inclined form, which is configured to meet practical needs, including guiding external rainwater flow downstream, reducing driving resistance, and enhancing external aesthetics. The second bottom frame chassis 201 may be designed as a downward concave form, which will not be described any further here.

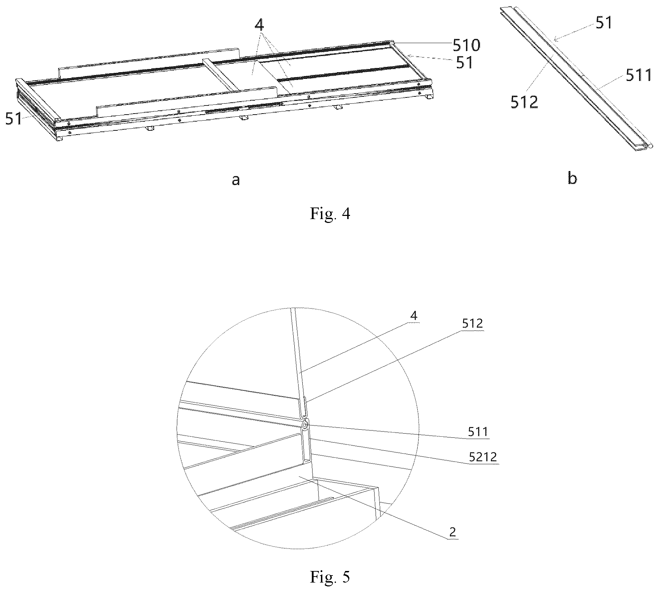

As shown in Figs. 3a, 3b, 4a, 4b, and 5, in an embodiment of the present invention, the folding structure 5 includes first folding structures 51, which are arranged at first movable connections 510 between the side panels 4 and the top frame 1 as well as between the side panels and the bottom frame 2. Each of the first folding structures 51 includes a first pivot shaft 511 and a first connecting plate 512. The first pivot shaft 511 is inserted with both ends into small holes arranged on inner walls of the top frame 1, and is connected movably to two oppositely arranged ends of an lateral edge of the top frame 1. One side of the first connecting plate 512 is fixedly connected to an edge of a side panel 4, and the other side of the first connecting plate 512 is fixedly connected to a lateral side of the first pivot shaft 511. The bottom frame 2 is provided with a second connecting socket 5212 in a fixed manner, and a first pivot shaft 511 is arranged inside a groove of the second connecting socket 5212, and can rotate up to 90° within the groove. When the side panel 4 is in an unfolded state, the side panel 4 rotates downward around the first pivot shaft 511 to a vertical position, and a free end of the side panel 4 is in contact with and fixed to a top side of the bottom frame 2. The fixing mechanism may be implemented through an interference fit clamping or the use of a fastener to ensure stable connection. When the side panel 4 is in a folded and closed state, the side panel 4 rotates upward around the first pivot shaft 511 toward the interior of the vehicle-mounted hardtop tent until the side panel 4 contacts and adheres to a lower panel surface of the top frame 1 (see Fig. 5).

As shown in Figs. 4a and 4b, as an alternative embodiment, a first movable connection 510 may be provided on the bottom frame 2. When a side panel 4 is in an unfolded and open state, the side panel 4 rotates upward around a first pivot shaft 511 to the vertical position, and a free end of the side panel 4 is in contact with and fixed to a bottom side of the top frame 1. When the side panel 4 is in the folded and closed state, the side panel 4 rotates downward around the first pivot shaft 511 toward the interior of the vehicle-mounted hardtop tent until the side panel 4 contacts and adheres to a top surface of the bottom frame 2.

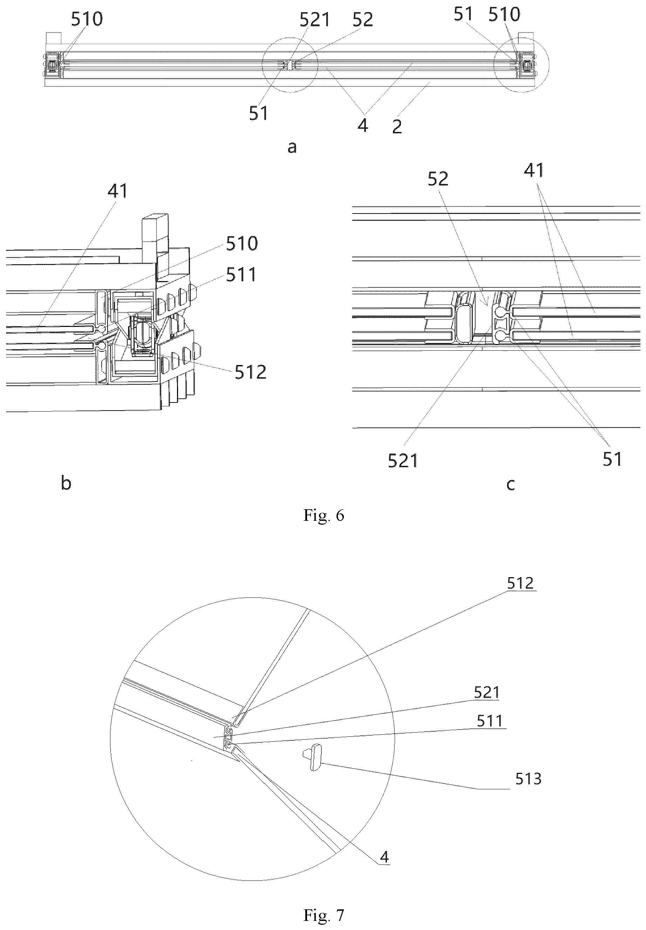

As shown in Figs. 3a, 3b, 4a, 4b, 6a, 6b, 6c, and 7, in an embodiment of the present invention, the folding structure 5 further comprises second folding structures 52. Each of the second folding structures 52 comprises a first connecting socket 521 and two first folding structures 51. Two first pivot shafts 511 are respectively connected to two ends at one lateral side of the first connecting socket 521, and ends of the first connecting plates 512 away from the first pivot shafts 511 are each fixedly connected to side panels 4, and other ends of the side panels 4 are respectively connected to the top frame 1 and the bottom frame 2. The first connecting socket 521 is further provided with connecting socket plugs 513 at both ends. The socket plugs 513 are sealed at both ends of the first connecting socket 521. When the side panels 4 are in an unfolded state, the first movable connections 510 of the top frame 1 and the bottom frame 2 move away from each other in a direction toward or away from the bottom frame 2, allowing the first folding structures 51 to rotate around the first connecting socket 521 until that the side panels 4 are unfolded to the vertical position and the first folding structures 51 are in the same plane with the connecting socket 521 (see Fig. 3a). When the side panels 4 are in a folded and closed state, the first movable connections 510 of the top frame 1 and the bottom frame 2 approaches each other in the direction toward or away from the bottom frame 2, allowing the first folding structures 51 to rotate around the first connecting socket 521 until that the side panels 4 are folded and closed to a horizontal position and the side panels 4 above and below the two second folding structures 52 are parallel to each other (see Figs. 6a, 6b, and 6c).

As shown in Figs. 1, 2, 3a, 3b, 4a, and 4b, in an embodiment of the present invention, the side panels 4 are arranged in pairs and symmetrically positioned between the top frame 1 and the bottom frame 2, and are movably connected to edge plates 74 provided at edges of the top frame 1 and the bottom frame 2, respectively. When the top frame 1 and the bottom frame 2 move toward each other, the side panels 4 can be folded to form parallel panel surfaces 41 which are parallel to and in contact with the top frame 1 and the bottom frame 2, respectively. When the top frame 1 and the bottom frame 2 move away from each other, the side panels 4 unfold to an unfolded state between the top frame 1 and the bottom frame 2.

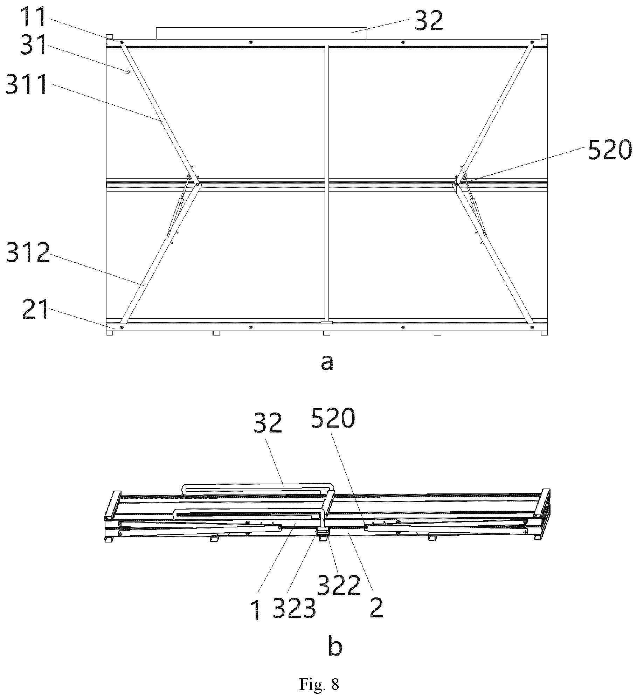

As shown in Figs. 8a and 8b, in an embodiment of the present invention, the lifting mechanism 3 may include a plurality of support arm structures 31. Each of the support arm structures 31 includes an upper support arm 311 and a lower support arm 312. One end of the upper support arm 311 is connected to the lower panel surface of the top frame 1 in a movable manner, the other end thereof is connected to one end of the lower support arm 312, and the other end of the lower support arm 312 is connected to the upper panel surface of the bottom frame 2 in a movable manner. The upper support arm 311 and the lower support arm 312 partially form a second movable connection 520. The upper support arm 311 and the lower support arm 312 can be folded up and down to coincide together via the second movable connection 520. Each of the support arm structures 31 is arranged outside an edge of the side panel 4, with a coincidence surface thereof parallel to a lateral surface of the side panel, and is configured to drive the top frame 1 to approach or move away from the bottom frame 2.

As shown in Figs. 6a and 6b, in an embodiment of the present invention, the lifting mechanism 3 comprises two sets of support arm structures 31. A panel corner formed by the top frame 1 is called an upper panel corner 11, and a panel corner formed by the bottom frame 2 is called a lower panel corner 21. The upper support arm 311 is connected to an edge of the upper panel corner 11 of the top frame 1, and the lower support arm 312 is connected to an edge of the lower panel corner 21 of the bottom frame 2. Two support arm structures 31 form as one set, and the second movable connections 520 of each set of support arm structures 31 are arranged oppositely and located between the top frame 1 and the bottom frame 2. The two sets of support arm structures 31 are symmetrically arranged.

As shown in Figs. 9a and 9b, in an embodiment of the present invention, the support arm structure 31 may further include a hydraulic mechanism 313. The hydraulic mechanism 313 is arranged on arm surfaces of the upper support arm 311 and the lower support arm 312 of each support arm structure 31, which face each other, with one end thereof being fixedly connected to the lower support arm 312 and the other end thereof being fixedly connected to the upper support arm 311. The hydraulic mechanism 313 is a hydraulic support bracket 3131. When the vehicle-mounted hardtop tent is unfolded, the hydraulic support bracket 3131 assists the support arm structure 31 by exerting force to the upper support arm 311 and the lower support arm 312 by means of its internal hydraulic assistance, so that the top frame 1 moves away from the bottom frame 2 into an unfolded state. The hydraulic support bracket 3131 is arranged inside an accommodating space between the upper support arm 311 and the lower support arm 312 (see Figs. 8a and 8b).

As shown in Figs. 8a and 8b, in an embodiment of the present invention, the lifting mechanism 3 further comprises two chain-form lifting mechanisms 32, which are symmetrically arranged on the top frame 1 or the bottom frame 2. Each of the chain-form lifting mechanisms 32 includes a driving motor (not shown in the figure), a chain 322, and an accommodating box 323. The accommodating box 323 is arranged on the top frame 1, and the driving motor is placed inside the accommodating box 323. One end of the chain 322 is connected to an output shaft of the driving motor, and the other end thereof is fixedly connected to the bottom frame 2. To unfold the vehicle-mounted hard tent, the drive motor is actuated, and it rotates to wind the chain 322 around the output shaft, so that the top frame 1 fixed to the other end of the chain is driven by the chain to move away from the bottom frame 2. Upon moving to a farthest position, the drive motor stops running. To fold and close the vehicle-mounted hardtop tent, the drive motor is actuated and rotates in an opposite direction to wind the chain 322 around the output shaft in reverse, so that the top frame 1 fixed to the other end of the chain is driven by the chain to move toward the bottom frame 2. Once it reaches the nearest position, the drive motor stops.

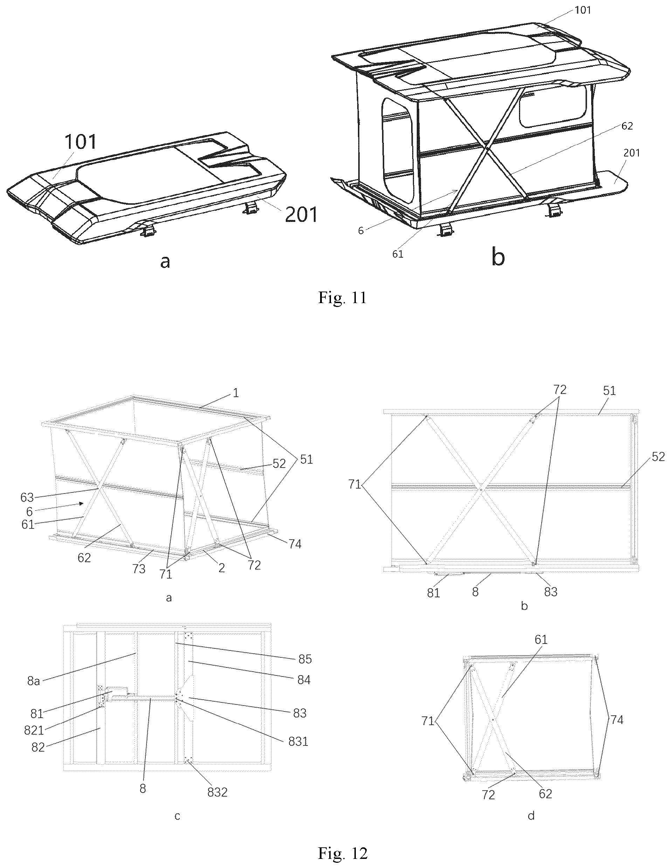

As shown in Figs. 10a, 10b, 11a, and 11b, in an embodiment of the present invention, the chain 322 is located between the two second movable connections 520, and is arranged along the direction of the top frame 1 approaching or moving away from the bottom frame 2. The lifting mechanism 3 is located outside the side panels 4 and connected to the edges of the top frame 1 and the bottom frame 2, respectively, and is configured to drive the top frame 1 to move toward or away from the bottom frame 2. The top and bottom of the lifting mechanism 3 are respectively equipped with a second top frame cap 101 and a second bottom frame bottom chassis 201. The second top frame cap 101 and the second bottom frame bottom chassis 201 are connected to the top frame 1 and the bottom frame 2, respectively, and are configured to seal and protect the lifting mechanism 3.

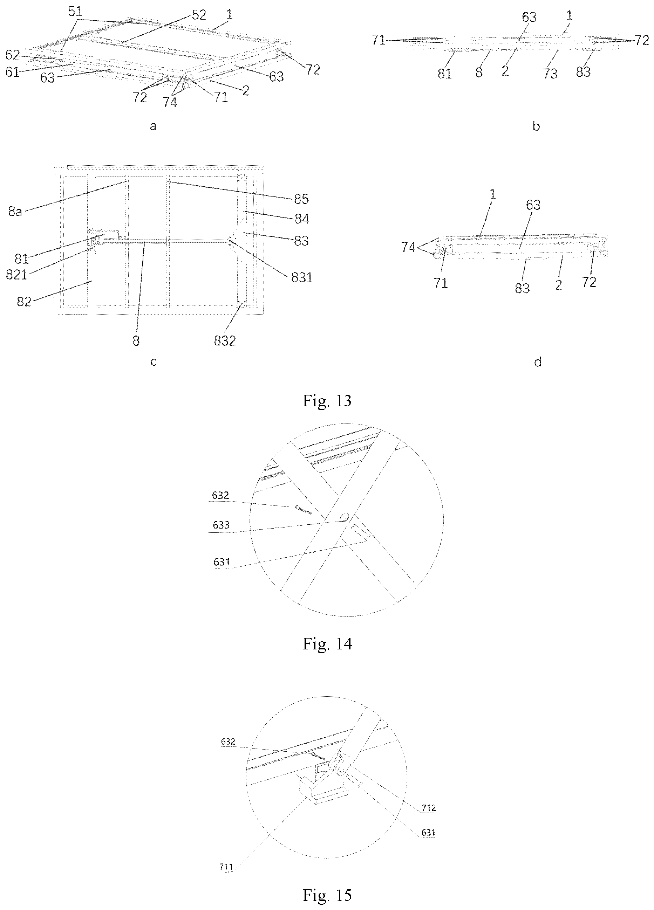

As shown in Figs. 11a, 11b, 12a, 12b, 12c, 12d, 13a, 13b, 13c, and 13d, in an embodiment of the present invention, the lifting mechanism 3 comprises a plurality of X-shaped scissor-like structures 6 arranged between the top frame 1 and the bottom frame 2. The first support arm 61 and the second support arm 62 are flexibly connected at a third movable connection 63 on the edge plates 74 arranged at the edges of the top frame 1 and the bottom frame 2. The first support arm 61 and the second support arm 62 are configured to drive or support the top frame 1 to move toward or away from the bottom frame 2. As shown in Fig. 14, the third movable connection 63 is provided with a first shaft sleeve 633, at which the first support arm 61 and the second support arm 62 are connected to each other by means of a perforated pin shaft 631 and an cotter pin 632. The cotter pin 632 is configured to fix the perforated pin shaft 631 to prevent it from falling off. The perforated pin 631 is configured to connect the first support arm 61 and the second support arm 62, and enable rotation of the first support arm 61 and the second support arm 62 around the perforated pin 631.

In an embodiment of the present invention, multiple or a plurality of scissor-like structures 6 between the top frame 1 and the bottom frame 2 are arranged in a symmetrical or neighboring manner according to an orientation and position of the side panels 4. For example, one of the scissor-like structures 6 may be positioned at the location of the side panel 4 where the second folding structure 52 is located, and another is positioned adjacent to said location (as shown in Figs. 12a and 13a). Alternatively, the scissor-like structures 6 may be symmetrically arranged in pairs on an outer side between the top frame 1 and the bottom frame 2.

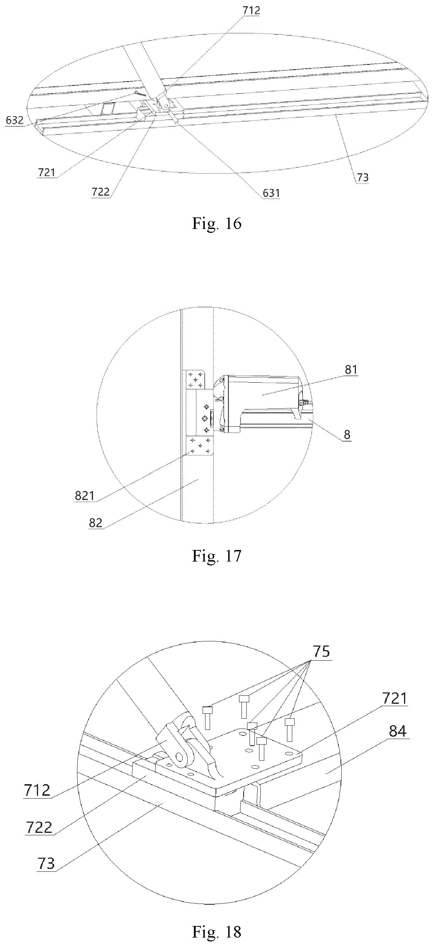

In an embodiment of the present invention, the scissor-like structure 6 comprises a first support arm 61 and a second support arm 62 that are connected in a cross and movable manner. Both ends of both the first support arm 61 and the second support arm 62 are movably connected to the lower panel surface of the top frame 1 and the upper panel surface of the bottom frame 2, respectively. The first support arm 61 and the second support arm 62 at the same side are in movable connection with the lower panel surface of the top frame and the upper panel surface of the bottom frame, respectively, via a connecting piece. The movable connection includes rotational connection and sliding connection. As shown in Figs. 15 and 16, a lower end of the first support arm 61 is rotatably connected to the upper panel surface of the bottom frame 2 at a fourth movable connection 71, and a top of the second support arm 61 is rotatably connected to the lower panel surface of the top frame 1 at another fourth movable connection 71. The other ends of the first support arm 61 and the second support arm 62 are connected to sliding rails 73 arranged on the edge plates 74 on the lower panel surface of the top frame 1 and the upper panel surface of the bottom frame 2, respectively. As shown in Figs. 15 and 16, the top of the first support arm 61 is slidably connected to the lower panel surface of the top frame 1 at a fifth movable connection 72, and the lower end of the second support arm 62 is slidably connected to the upper panel surface of the bottom frame 2 at another fifth movable connection 72.

In an embodiment of the present invention, the rotational connection at the fourth movable connection 71 is shown in Fig. 15. A second shaft sleeve 712 is provided on the first support arm 61, and a first base 711 is provided on the upper panel surface of the bottom frame 2. The first base 711 and the second shaft sleeve 712 are movably connected by means of a perforated pin shaft 631 and a cotter pin 632. The first base 711 is configured to constrain movement but enable rotation of the first support arm 61 and the second support arm 62. The perforated pin shaft 631 is configured to movably connect the first base 711 with the second shaft sleeve 712.

In an embodiment of the present invention, the rotational connection at the fifth movable connection 72 is shown in Fig. 16. Second shaft sleeves 712 are provided on the second support arms 62, and sliding rails 73 are provided symmetrically on both sides of the upper panel surface of the bottom frame 2. The sliding rails 73 are arranged along the edges of the lower panel surface of the top frame as well as the upper panel surface of the bottom frame. A slider 722 is provided on a rail of the sliding rail 73, and a top surface of the slider 722 is connected to a movable connector. The slider 722 is configured to fit to the rail and link the movable connector to slide along the rail of the slide rail 73. The movable connector includes the second shaft sleeve 712 and a second base 721. The second base 721 is configured to movably connect the second shaft sleeve 712 and drive the first support arm 61 or the second support arm 62 to slide along the rail of the sliding rail 73. The slide rail 73 is configured to constrain movement of the slider 722 and guide the slider to move in a straight line along the slide rail 73. A perforated pin shaft 631 passes through small apertures arranged on the second shaft sleeve 712 and the second base 721, and a cotter pin 632 is provided to constrain movement of the loosen perforated pin shaft 631. Tops of the first support arm 61 and the second support arm 62 support the top frame 1 to move toward or away from the bottom frame 2 over the bottom frame 2 when the other ends of the first support arm 61 and the second support arm 62 are sliding on the slide rails 73 along with the sliders 722, and at the same time the first folding structure 51 and the second folding structure 52 are driven to rotate, so that the tent runs in a unfolded or folded state.

In an embodiment of the present invention, as an optional implementation, an electric push-rod 8 is provided on a portion of the top frame 1 or the bottom frame 2 that is between the first support arm 61 and the second support arm 62. One end of the electric push-rod 8 is fixedly connected to a bottom of the first support arm, and the other end thereof is fixedly connected to a bottom of the second support arm. One end of the electric push-rod 8 is equipped with a push-rod motor 81, which is fixed to the top frame 1 or the bottom frame 2.

As shown in Fig. 19, as an optional implementation, a movable synchronous sliding rod 84, a first fixed rod 801, a second fixed rod 82, and a limit rod 85 are provided on the bottom frame 2 and between the first support arms 61 or the second support arms 62 of the scissor-like structures 6. The push-rod motor 81 is fixedly connected to the second fixed rod 82, and an outer wall of telescopic structure of the electric push-rod 8 is fixedly connected to the first fixed rod 801, so that a direction of telescopic movement of the electric push-rod 8 can be bounded. A tip extending from the telescopic structure of the electric push-rod 8 is fixedly connected to the synchronous sliding rod 84 by means of a reinforced connecting plate 83. The reinforced connecting plate 83 is nearly parallel to the synchronous sliding rod 84, and the two are connected each other via a connecting base 831. The reinforced connecting plate 83 is used for synchronous sliding of the second support arms 62 or the symmetrically arranged second support arms 62, so that the top frame 1 is driven smoothly to move away from and approach the bottom frame 2. As shown in Fig. 17, the second fixing rod 82 is fixedly connected to the push-rod motor 81 via a push-rod motor fixing base 821, bolts and nuts. The push-rod motor 81 is configured to provide power for extension and retraction of the electric push-rod 8. As shown in Figs. 12c, 13c, 18, and 19, both ends of the synchronous sliding rod 84 are provided with synchronous sliding rod connections 832. The synchronous sliding rod 84 is fixedly connected, at the synchronous sliding rod connections 832, to the sliders 722 at both ends by the second bases 721 using fastening bolts 75, and each of the second bases 721 is connected to a second shaft sleeve 712 via a perforated pin shaft and an cotter pin (see Fig. 18). The range of extension and retraction of the telescopic structure of the electric push-rod 8 is collectively defined by the following three factors: the limit rod 85 located at the front end of the outer wall of the telescopic structure of the electric push-rod 8, a frame bar of the bottom frame 2 located at the front end of the telescopic structure of the electric push-rod 8, and the extendable and retractable stroke length of the telescopic rod in the telescopic structure. The scissor-like structure 6 can also be provided on the outer side of the laterally positioned side panels 4 (see Figs. 12a, 12d, 13a, 13d, and 19).

In an embodiment of the present invention, a telescopic end of the electric push-rod 8 is fixedly connected to the movable synchronous sliding rod 84, and movable synchronous sliding rod 84 is fixedly connected to the first support arm 61 or the second support arm 62 on a slide rail 73, so that the synchronous sliding rod 84 drives the first support arm 61 or the second support arm 62 to slide along the slide rail 73. When the push-rod motor 81 runs to drive the electric push-rod 8 to retract, one of the first support arm 61 and the second support arm 62 slides on the sliding rail 73 in a direction toward the other, so that the tops of the first support arm 61 and the second support arm 62 approach each other, or the bottoms of the first support arm 61 and the second support arm 62 approach each other. At the same time, the scissor-like structure 6 unfolds from the bottom frame 2, allowing the top frame 1 to move away from the bottom frame 2. When the electric push-rod 8 retracts to drive the synchronous sliding rod 84 to press against the limit rod 85, the bottoms or tops of the first support arm 61 and the second support arm 62 approach to the nearest position, at which time the top frame 1 moves away from the bottom frame 2 to the farthest position (as shown in Figs. 11b, 12a, 12b, 12c, and 12d). When the push-rod motor 81 runs to drive the electric push-rod 8 to extend, one of the first support arm 61 and the second support arm 62 slides on the sliding rail 73 in a direction away from the other, so that the tops of the first support arm 61 and the second support arm 62 move away from each other, or the bottoms of the first support arm 61 and the second support arm 62 move away from each other. At the same time, the scissor-like structure 6 folds and closes onto the bottom frame 2, allowing the top frame 1 to move toward the bottom frame 2. When the electric push-rod 8 extends to drive the synchronous sliding rod 84 to press against an inner frame bar of the bottom frame 2 (or when the electric push-rod 8 extends to its maximum length), the bottom or tops of the first support arm 61 and the second support arm 62 move away from each other to the farthest distance, at which time the top frame 1 approaches the bottom frame 2 to the nearest position (as shown in the folded state in Figs. 11a, 13a, 13b, 13c, and 13d).

In an embodiment of the present invention, through retraction and extension, the above electric push-rod 8 enables the top frame 1 to move away from or approach the bottom frame 2, thereby driving the top frame 1 over the bottom frame 2 to move away from and approach the bottom frame 2.

As shown in Figs. 20 to 23, the vehicle-mounted hardtop tent is made up of the various structures in the above figures sequentially corrected from top to bottom. Specifically, the second top frame cap 101 is fixedly connected to the top frame 1 via bolts and nuts; the second bottom frame bottom chassis 201 is fixedly connected to the bottom frame 2 via bolts and nuts. At the same time, the second bottom frame bottom chassis 201 is fixedly connected to the body of a vehicle by means of an onboard tent-fixing crossbar 9 via bolts and nuts (as shown in Figs. 23 and 11b).

In an embodiment of the present invention, an automobile is provided and comprises: a vehicle main body and a vehicle-mounted hardtop tent as described above, wherein the vehicle-mounted hardtop tent is installed on a compartment at the top or rear of the body, covers the compartment at the top or rear of the body, and can be folded or unfolded on the compartment at the top or rear of the body.

These above are only preferred embodiments of the preferred implementations of the present invention, rather than limitation to the preferred implementations of the present invention in any form. While the preferred implementations of the present invention have been disclosed as above by those preferred embodiments, it is not intended to limit the preferred embodiments of the present invention. Any technical personnel familiar with the field can obtain equivalent implementations by performing equivalent changes like some modifications or decorations on the basis of the above disclosed technical contents without departing from the scope of the technical solutions of the preferred implementations of the present invention. Any simple modifications, equivalent changes and decorations made to the above embodiments according to the technical essence of the preferred implementations of the present invention, which are not separated from the technical solutions of the preferred implementations of the present invention, should be still included within the scope of the technical solutions of the preferred embodiments of the present invention.

## Claims

1. A vehicle-mounted hardtop tent, comprising: a top frame and a bottom frame, a lifting mechanism, and multiple pairs of foldable side panels, wherein:
the top frame is located above the bottom frame;
the side panels are arranged in pairs and symmetrically between the top frame and the bottom frame, and are respectively connected to an edge of one of the top frame and the bottom frame;
when the top frame and the bottom frame approach each other, the side panels are configured to fold into a panel surface, which is substantially parallel to the top frame and the bottom frame;
when the top frame and the bottom frame move away from each other, the side panels are configured to unfold between the top frame and the bottom frame; and
the lifting mechanism is arranged adjacent to the side panels and connected to edges of the top frame and the bottom frame, and is configured to drive the top frame to move toward or away from the bottom frame.

2. The vehicle-mounted hardtop tent according to claim 1, wherein:
the vehicle-mounted hardtop tent further comprises folding structures that connect the side panels to the edges of the top frame and the bottom frame in a movable manner;
the folding structures comprise first folding structures arranged at first movable connections between the side panels, the top frame, and the bottom frame;
each of the first folding structures comprises a first pivot shaft and a first connecting plate; and
the first pivot shaft is movably connected to both lateral sides of the top frame, one end of the first connecting plate is fixedly connected to a side panel, and the other end of the first connecting plate is fixedly connected to the first pivot shaft.

3. The vehicle-mounted hardtop tent according to claim 2, wherein:
the folding structures further comprise second folding structures;
each of the second folding structures comprises a connecting socket and a first folding structure; and
two first pivot shafts are respectively connected to both ends of the connecting socket in a movable manner, one end of the first connecting plate that is away from the first pivot shaft is connected to a side panel, and other ends are respectively connected to the top frame and the bottom frame in a movable manner.

4. The vehicle-mounted hardtop tent according to claim 1, wherein:
the lifting mechanism comprises a plurality of support arm structures;
each of the support arm structures comprises an upper support arm and a lower support arm;
one end of the upper support arm is connected to a lower panel surface of the top frame, the other end of the upper support arm is connected to one end of the lower support arm, and the other end of the lower support arm is connected to an upper panel surface of the bottom frame; and
the upper support arm and the lower support arm form a second movable connection, and the upper support arm and the lower support arm are folded up and down through the second movable connection, each support arm structure is arranged outside an edge of a side panel, and is configured to drive the top frame to move toward or away from the bottom frame.

5. The vehicle-mounted hardtop tent according to claim 4, wherein:
the support arm structures are arranged in two symmetrically positioned sets;
each of upper support arms is connected to an edge of a panel corner of the top frame, and each of lower support arms is connected to an edge of a panel corner of the bottom frame; and
two support arm structures form one set, and second movable connections of each set of the support arm structures are opposite to each other.

6. The vehicle mounted hardtop tent according to claim 5, wherein:
the support arm structure further comprises a hydraulic mechanism; and
the hydraulic mechanism is arranged on arm surfaces of the upper support arm and the lower support arm which face each other, with one end of the hydraulic mechanism fixedly connected to the lower support arm and the other end fixedly connected to the upper support arm.

7. The vehicle-mounted hardtop tent according to claim 5, wherein:
the lifting mechanism further comprises a plurality of chain-form lifting mechanisms;
the plurality of chain-form lifting mechanisms are symmetrically arranged on the top frame or the bottom frame;
each of the chain-form lifting mechanisms comprises a driving motor, a chain, and an accommodating box; and
the accommodating box is arranged on the top frame, the driving motor is arranged inside the accommodating box, one end of the chain is connected to an output shaft of the driving motor, and the other end of the chain is fixedly connected to the bottom frame.

8. The vehicle-mounted hardtop tent according to claim 7, wherein the chain is located in a middle of the two second movable connections, and is arranged in a direction that the top frame approaches or moves away from the bottom frame.

9. The vehicle-mounted hardtop tent according to claim 3, wherein:
the lifting mechanism comprises a plurality of X-shaped scissor-like structures arranged between the top frame and the bottom frame;
each of the scissor-like structures comprises a first support arm and a second support arm that are connected in a cross and movable manner; and
both ends of each of the first support arm and the second support arm are connected to a lower panel surface of the top frame and an upper panel surface of the bottom frame, respectively, allowing lifting and lowering of the top frame above the bottom frame

10. The vehicle-mounted hardtop tent according to claim 9, wherein:
one end of the first support arm and one end of the second support arm are connected to one of the lower panel surface of the top frame and the upper panel surface of the bottom frame, respectively; and
the other end of the first support arm and the other end of the second support arm are connected to the other one of the lower panel surface of the top frame and the upper panel surface of the bottom frame, respectively.

11. The vehicle-mounted hardtop tent according to claim 10, wherein:
an electric push-rod is provided on a portion of the top frame or the bottom frame that is between the first support arm and the second support arm, with one end of the electric push-rod fixedly connected to the first support arm and the other end fixedly connected to the second support arm;
when the electric push-rod retracts, one of the first support arm and the second support arm slides along a sliding rail towards the other, allowing tops of the first support arm and the second support arm to approach each other, or allowing bottoms of the first support arm and the second support arm to approach each other; and
when the electric push-rod extends out, one of the first support arm and the second support arm slides along the sliding rail away from the other, allowing the tops of the first support arm and the second support arm to move away from each other, or allowing the bottoms of the first support arm and the second support arm to move away from each other.

12. The vehicle-mounted hardtop tent according to claim 11, wherein:
the electric push-rod is fixedly connected to a synchronous sliding rod;
the synchronous sliding rod is fixedly connected to a corresponding first or second support arm on the slide rail; and
the synchronous sliding rod is configured to drive the first or second support arm to slide along the slide rail.

13. The vehicle-mounted hardtop tent according to claim 9, wherein the scissor-like structures between the top frame and the bottom frame are arranged in a symmetrical or neighboring manner according to an orientation and position of the side panels.

14. The vehicle-mounted hardtop tent according to claim 1, wherein the bottom frame and the top frame are plate-like frames, a top frame cap is provided onto the top frame, and a bottom frame chassis is provided beneath the bottom frame.

15. An automobile, comprising:
a main body; and
the vehicle-mounted hardtop tent according to any one of claims 1 to 14, wherein the vehicle-mounted hardtop tent is installed on a compartment at a top or rear of the main body, covers the compartment at the top or rear of the main body, and is configured to be folded or unfolded on the compartment at the top or rear of the main body.
